# EUROPEAN PATENT APPLICATION

(11) **EP 4 835 993 A1**
(43) Date of publication of application: **04.11.2026**
(21) Application number: 24910578.4
(22) Date of filing: 03.12.2024
(51) Int. Cl.: H01M 4/36, H01M 4/58, H01M 4/62, H01M 10/054, H01M 4/136

(54) **POLYANION-BASED SODIUM BATTERY POSITIVE ELECTRODE MATERIAL, PREPARATION METHOD THEREFOR, AND APPLICATION THEREOF**

(30) Priority: 29.12.2023 CN 202311868205
(71) Applicant: BYD Company Limited, Shenzhen, Guangdong 518118 (CN)
(72) Inventor: ZOU, Jian, Shenzhen, Guangdong 518118 (CN); MEI, Chen, Shenzhen, Guangdong 518118 (CN); LIAO, Qianyong, Shenzhen, Guangdong 518118 (CN); LI, Xiangyu, Shenzhen, Guangdong 518118 (CN); YIN, Xiaoqiang, Shenzhen, Guangdong 518118 (CN)
(74) Representative: Taor, Simon Edward William
(86) International application number: PCT/CN2024/136501
(87) International publication number: WO 2025/139646

(57) **Abstract**

A polyanion-based sodium-ion battery positive electrode material, a preparation method therefor, and an application thereof relate to the technical field of sodium-ion batteries. The polyanion-based sodium-ion battery positive electrode material includes a polyanionic compound and a carbon coating layer located on the surface of the polyanionic compound, and the chemical formula of the polyanionic compound is Na₄FeₐM_{b}(PO₄)₂P₂O₇, where 1.4≤a<3, 0.005<b≤1.7, 2.7<a+b<3, and M is a transition metal. Performing doping with a transition metal and engineering iron defects greatly reduces the impurity-phase content in the polyanionic material. Furthermore, the sodium-ion migration capability, the reversible capacity, and the energy density indicator of the positive electrode material are significantly improved.

## Description

This application claims priority to Chinese Patent Application No. 202311868205.7, filed with the China National Intellectual Property Administration on December 29, 2023, entitled "POLYANION-BASED SODIUM-ION BATTERY POSITIVE ELECTRODE MATERIAL, PREPARATION METHOD AND APPLICATION THEREOF", which is incorporated herein by reference in its entirety.

### TECHNICAL FIELD

This application relates to the field of sodium-ion battery technologies, and specifically, to a polyanion-based sodium-ion battery positive electrode material, and a preparation method and application thereof.

### BACKGROUND

Characterized by high energy density and a long service life, lithium-ion batteries are currently widely used in various smart devices, electric vehicles, and energy storage. However, scarcity of lithium elements results in persistently high prices of lithium-ion batteries. To better promote energy-saving and environmental-protection concepts while meeting market requirements, reducing battery costs becomes imperative. Sodium-ion batteries operate based on a same working principle as lithium-ion batteries, and sodium resources are abundant and inexhaustible, giving sodium-ion batteries a theoretical cost advantage and making the sodium-ion batteries worthy of further development.

Currently, mainstream sodium-ion batteries on the market employ layered oxide, Prussian white, and polyanionic materials as primary positive electrode materials. The polyanionic material attracts considerable attention due to a cost advantage and exceptionally long cycle life. In the polyanionic material, Na₄Fe₃(PO₄)P₂O₇ possesses a theoretical capacity of 129 mAh/g and a moderate voltage (3.1 V), and is considered to be one of most promising materials. However, large-scale synthesis of this material is often accompanied by formation of impurity phases such as NaFePO₄ and Na₂FeP₂O₇, and NaFePO₄ and Na₂FeP₂O₇ exhibit poor electrochemical activity. Presence of these two by-products significantly reduces a yield of Na₄Fe₃(PO₄)P₂O₇ and adversely affects an overall capacity of the material.

### SUMMARY

This application discloses a polyanion-based sodium-ion battery positive electrode material, and a preparation method and application thereof, to overcome problems of high impurity phase content and a low charge-discharge capacity of an iron-based polyanionic sodium-ion battery positive electrode material during large-scale production in a conventional technology.

According to a first aspect, this application provides a polyanion-based sodium-ion battery positive electrode material. The polyanion-based sodium-ion battery positive electrode material includes a polyanionic compound and a carbon coating layer located on a surface of the polyanionic compound.

A chemical formula of the polyanionic compound is Na₄FeₐM_{b}(PO₄)₂P₂O₇, where 1.4≤a<3, 0.005<b≤1.7, and 2.7<a+b<3.0, and M is a transition metal.

Optionally, the carbon content is 1 wt% to 5 wt% based on the total weight of the polyanion-based sodium-ion battery positive electrode material.

Optionally, the carbon content is 1 wt% to 3 wt% based on the total weight of the polyanion-based sodium-ion battery positive electrode material.

Optionally, M is selected from one or more of Mn, Co, Ni, Cr, Ti, and V.

Optionally, 1.5≤a<2.99, and 0.01≤b<1.

According to a second aspect, this application discloses a preparation method for the polyanion-based sodium-ion battery positive electrode material according to any one of the foregoing implementations. The method includes the following steps:
(1) ball milling a sodium source, a phosphorus source, a carbon source, an iron source, and a transition metal source to obtain a mixture;
(2) spray drying the mixture to obtain precursor powder; and
(3) calcining the precursor powder at 450°C to 650°C under protective gas.

Optionally, a ball milling condition in step (1) includes: a rotation speed of 1000 r/min to 3000 r/min and time of 2 h to 10 h.

Optionally, a spray drying condition in step (2) includes a temperature of 150°C to 300°C.

Optionally, the sodium source is selected from one or more of the following: sodium acetate, sodium oxalate, sodium citrate, trisodium phosphate, sodium dihydrogen phosphate, disodium hydrogen phosphate, sodium pyrophosphate, sodium carbonate, and sodium bicarbonate.

Optionally, the iron source is selected from one or more of the following: iron phosphate, iron nitrate, iron oxide, triiron tetraoxide, ferric sulfate, and ferrous sulfate.

Optionally, the transition metal source is selected from phosphate or oxide of the transition metal.

Optionally, the phosphorus source is selected from one or more of the following: phosphoric acid, ammonium dihydrogen phosphate, diammonium hydrogen phosphate, sodium dihydrogen phosphate, disodium hydrogen phosphate, sodium phosphate, sodium pyrophosphate, trisodium monohydrogen pyrophosphate, disodium dihydrogen pyrophosphate, and monosodium trihydrogen pyrophosphate.

Optionally, the carbon source is selected from one or more of the following: graphene, carbon black, carbon nanotube, Super P, carbon fiber, ascorbic acid, citric acid, glucose, polyethylene glycol, formaldehyde, acetaldehyde, citric acid, malic acid, oxalic acid, adipic acid, starch, and sucrose.

According to a third aspect, this application discloses use of the polyanion-based sodium-ion battery positive electrode material according to any one of the foregoing implementations in a sodium-ion battery.

According to a fourth aspect, this application discloses a positive electrode sheet. The positive electrode sheet includes the polyanion-based sodium-ion battery positive electrode material according to any one of the foregoing implementations.

According to a fifth aspect, this application discloses a sodium-ion battery. The sodium-ion battery includes the positive electrode sheet in any one of the foregoing implementations.

Compared with a conventional technology, this application has the following advantages:
1. This application discloses a polyanion-based sodium-ion battery positive electrode material. Impurity phase content in a polyanionic material is substantially reduced by doping a transition metal and creating an iron deficiency. In addition, a sodium-ion migration capability, a reversible capacity, and energy-density performance of the positive electrode material are all significantly enhanced. Using this positive electrode material helps obtain a sodium-ion battery with a high specific capacity and high capacity retention.
2. This application further discloses a method for preparing the polyanion-based sodium-ion battery positive electrode material. In the method, precursor powder is obtained by ball milling and spray drying raw materials, and then the polyanion-based sodium-ion battery positive electrode material is obtained by calcining the precursor powder under protective gas. The preparation method is simple to operate, the raw materials are readily available, no additional device is required, and large-scale mass production can be implemented by using a conventional lithium iron phosphate production line.

The foregoing descriptions are merely a summary of the technical solutions of this application. To enable a clearer understanding of technical means of this application and to allow implementation according to content of this specification, and to make the foregoing and other objectives, features, and advantages of this application comprehensible, the following describes specific implementations of this application.

### BRIEF DESCRIPTION OF DRAWINGS

To describe the technical solutions in embodiments of this application or a related technology more clearly, the following briefly describes the accompanying drawings used for describing embodiments or the related technology. It is clear that the accompanying drawings in the following descriptions are some embodiments of this application, and a person of ordinary skill in the art may still derive other drawings from these accompanying drawings without creative efforts.
FIG. 1 is an XRD pattern of a product prepared in Comparative Example 1 of this application;
FIG. 2 is an SEM characterization result diagram of a product prepared in Example 1 of this application;
FIG. 3 is an XRD pattern of the product prepared in Example 1 of this application;
FIG. 4 is an XRD pattern of a product prepared in Example 2 of this application;
FIG. 5 is an XRD pattern of a product prepared in Example 3 of this application;
FIG. 6 is an XRD pattern of a product prepared in Example 4 of this application;
FIG. 7 is an XRD pattern of a product prepared in Example 5 of this application;
FIG. 8 is a charge-discharge curve of a button cell made from a product prepared in Comparative Example 1 of Test Example 1 of this application;
FIG. 9 is a charge-discharge curve of a button cell made from a product prepared in Example 1 of Test Example 1 of this application;
FIG. 10 is a charge-discharge curve of a button cell made from a product prepared in Example 2 of Test Example 1 of this application;
FIG. 11 is a charge-discharge curve of a button cell made from a product prepared in Example 3 of Test Example 1 of this application;
FIG. 12 is a charge-discharge curve of a button cell made from a product prepared in Example 4 of Test Example 1 of this application; and
FIG. 13 is a charge-discharge curve of a button cell made from a product prepared in Example 5 of Test Example 1 of this application.

### DESCRIPTION OF EMBODIMENTS

To make the objectives, technical solutions, and advantages of embodiments of this application clearer, the following clearly and completely describes the technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

The following describes in detail a polyanion-based sodium-ion battery positive electrode material, and a preparation method and application thereof provided in this application with reference to accompanying drawing.

In some embodiments of this application, a polyanion-based sodium-ion battery positive electrode material is disclosed. The polyanion-based sodium-ion battery positive electrode material includes a polyanionic compound and a carbon coating layer located on a surface of the polyanionic compound.

A chemical formula of the polyanionic compound is Na₄FeₐM_{b}(PO₄)₂P₂O₇, where 1.4≤a<3, 0.005<b≤1.7, and 2.7<a+b<3, and M is a transition metal.

In this application, a transition metal element and an iron deficiency are introduced to a Na₄FeₐM_{b}(PO₄)₂P₂O₇ structure of the sodium-ion battery positive electrode material. Through coordination between appropriate transition metal element doping and the iron deficiency, a sodium-ion migration capability, a reversible capacity, and energy-density performance of the positive electrode material are all significantly enhanced.

In some embodiments of this application, carbon content is 1 wt% to 5 wt% based on a total weight of the polyanion-based sodium-ion battery positive electrode material.

In some embodiments of this application, the carbon content is 1 wt% to 3 wt%. Too low carbon coating layer content leads to a decrease in electrical conductivity, while too high carbon coating layer content affects energy density of the material. In this application, the carbon coating layer content is preferably appropriately controlled, to ensure that both the electrical conductivity and the energy density fall within a good range.

In some embodiments of this application, to further improve coordination between an iron element and the transition metal element, thereby improving the sodium-ion migration capability of the positive electrode material, the transition metal M is selected from one or more of Mn, Co, Ni, Cr, Ti, and V.

In some embodiments of this application, to further improve the sodium-ion migration capability and the reversible capacity of the positive electrode material, a doping amount of the transition metal element and an amount of iron deficiencies may be further controlled. Specifically, 1.5≤a<2.99, 0.01≤b<1, 2.9<a+b<3.

In some embodiments of this application, a preparation method for the polyanion-based sodium-ion battery positive electrode material according to any one of the foregoing embodiments is further disclosed. The method includes the following steps:
(1) ball milling a sodium source, a phosphorus source, a carbon source, an iron source, and a transition metal source to obtain a mixture;
(2) spray drying the mixture to obtain precursor powder; and
(3) calcining the precursor powder at 450°C to 650°C under protective gas.

In the preparation method for the polyanion-based sodium-ion battery positive electrode material in this application, sodium, phosphorus, iron, and transition metal elements are charged according to a stoichiometric ratio, the precursor powder is obtained through a combined ball milling and spray drying process, and the precursor powder is then calcined under the protective gas, to obtain the polyanion-based sodium-ion battery positive electrode material in this application.

In some embodiments of this application, ball milling is mechanical ball milling, and a device used for ball milling is a sand mill. During ball milling, solid content is controlled to be 40 wt% to 80 wt%.

In some embodiments of this application, a rotation speed for ball milling is 1000 r/min to 3000 r/min, and ball milling time is 2 h to 10 h. Specifically, the rotation speed for ball milling may be set to any value such as 1000r/min, 1500r/min, 2000r/min, 2500r/min, or 3000r/min, or to a range between any two values, and the ball milling time may be set to any value such as 2h, 3h, 4h, 5h, 6h, 7h, 8h, 9h, or 10h, or to a range between any two values.

In some embodiments of this application, a spray drying condition in step (2) includes a temperature of 150°C to 300°C.

Specifically, a spray drying temperature may be set to any value such as 150°C, 180°C, 210°C, 240°C, 230°C, 250°C, 260°C, or 300°C, or to a range between any two values.

In some embodiments of this application, the sodium source is selected from one or more of the following: sodium acetate, sodium oxalate, sodium citrate, trisodium phosphate, sodium dihydrogen phosphate, disodium hydrogen phosphate, sodium pyrophosphate, sodium carbonate, and sodium bicarbonate.

In some embodiments of this application, the iron source is selected from one or more of the following: iron phosphate, iron nitrate, iron oxide, triiron tetraoxide, ferric sulfate, and ferrous sulfate.

In some embodiments of this application, the transition metal source is selected from phosphate or oxide of the transition metal.

In some embodiments of this application, the phosphorus source is selected from one or more of the following: phosphoric acid, ammonium dihydrogen phosphate, diammonium hydrogen phosphate, sodium dihydrogen phosphate, disodium hydrogen phosphate, sodium phosphate, sodium pyrophosphate, trisodium monohydrogen pyrophosphate, disodium dihydrogen pyrophosphate, and monosodium trihydrogen pyrophosphate.

During specific application, there is no special requirement for charging amounts of the sodium source, phosphorus source, iron source, and the transition metal source, provided that elements in the raw materials fall within ranges required in this application. For example, sodium pyrophosphate may serve as both the phosphorus source and the sodium source, and iron phosphate may provide both phosphorus and iron elements.

In some embodiments of this application, the carbon source is selected from one or more of the following: graphene, carbon black, carbon nanotube, Super P, carbon fiber, ascorbic acid, citric acid, glucose, polyethylene glycol, formaldehyde, acetaldehyde, citric acid, malic acid, oxalic acid, adipic acid, starch, and sucrose.

In some embodiments of this application, a molar ratio of the carbon source to a total amount of iron and transition metal elements is 0.3-5:1, where the carbon source is calculated based on the carbon element.

In some embodiments of this application, the protective gas in step (3) may be one of N₂, CO₂, and Ar, preferably N₂.

During specific application, a calcination temperature in step (3) may be set to any value such as 450°C, 470°C, 500°C, 520°C, 550°C, 570°C, 600°C, 620°C, or 650°C, or to a range between any two values.

In some embodiments of this application, use of the polyanion-based sodium-ion battery positive electrode material according to any one of the foregoing embodiments in a sodium-ion battery is further disclosed.

Using the polyanion-based sodium-ion battery positive electrode material provided in this application in the sodium-ion battery can further improve a specific capacity and capacity retention of the battery.

In some embodiments of this application, a positive electrode sheet is further disclosed. The positive electrode sheet includes the polyanion-based sodium-ion battery positive electrode material according to any one of the foregoing embodiments.

In some embodiments of this application, the positive electrode sheet further includes a conductive agent and binder. Based on a total weight of the polyanion-based sodium-ion battery positive electrode material, the conductive agent, and the binder, an amount of the polyanion-based sodium-ion battery positive electrode material is 80 wt% to 98 wt%, an amount of the conductive agent is 1 wt% to 15 wt%, and an amount of the binder is 1 wt% to 15 wt%. The conductive agent and the binder may be selected from conventional materials known in the art.

In some embodiments of this application, the positive electrode sheet further includes a positive current collector. There is no special requirement for selection of the positive current collector, and the positive current collector may be selected from a conventional material known in the art, such as aluminum foil.

In some embodiments of this application, a sodium-ion battery is further disclosed. The sodium-ion battery includes the positive electrode sheet in any one of the foregoing embodiments.

The following describes this application in detail through Comparative Examples, Examples, and Test Examples, but the protection scope of this application is not limited thereto.

### Comparative Example 1:

### Preparation of a polyanion-based sodium-ion battery positive electrode material D1:

Sodium carbonate, ammonium dihydrogen phosphate, ferric oxide, and glucose were respectively used as a sodium source, a phosphorus source, an iron source, and a carbon source; a molar ratio of sodium, iron, and phosphorus elements in the raw materials was controlled at 4:3:4; and a molar ratio of the carbon source (calculated based on a carbon element) to the iron element was controlled at 0.5:1;
the raw materials were charged into a sand mill and ball-milled at a rotation speed of 2000 r/min for 6 h, with solid content of 50 wt% during ball milling;
a mixture was prepared into dry precursor powder by spray drying at 250°C; and
the precursor powder was placed in a box furnace and calcined at 550°C for 12 h under an N₂ atmosphere, followed by natural cooling.

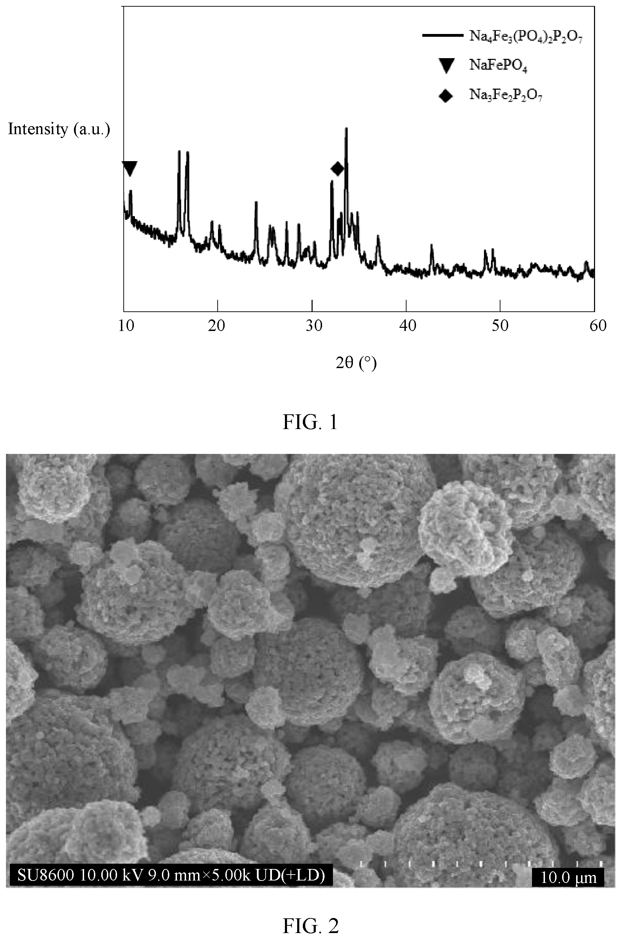

Carbon content of a prepared product was measured to be 1.8 wt%. A Fe/P molar ratio of the prepared product obtained through an ICP test and calculation was 0.749. As shown in FIG. 1, it may be learned from an XRD measurement that the product includes impurity phases NaFePO₄ and Na₂FeP₂O₇. Content of these two impurity phases obtained through further analysis and calculation were 7% and 8% respectively.

### Example 1:

### Preparation of a polyanion-based sodium-ion battery positive electrode material S1:

Sodium carbonate, ammonium dihydrogen phosphate, ferric oxide, manganese dioxide, and glucose were respectively used as a sodium source, a phosphorus source, an iron source, a manganese source, and a carbon source; a molar ratio of sodium, iron, manganese, and phosphorus elements in the raw materials was controlled at 4:2.98:0.01:4; and a molar ratio of the carbon source (calculated based on a carbon element) to a total amount of the iron and manganese elements was controlled at 0.5:1;
the raw materials were charged into a sand mill and ball-milled at a rotation speed of 2000 r/min for 6 h, with solid content of 50 wt% during ball milling;
a mixture was prepared into dry precursor powder by spray drying at 250°C; and
the precursor powder was placed in a box furnace and calcined at 550°C for 12 h under an N₂ atmosphere, followed by natural cooling, to obtain a product including Na₄Fe_{2.98}Mn_{0.01}(PO₄)₂P₂O₇ and a carbon coating layer on a surface of Na₄Fe_{2.98}Mn_{0.01}(PO₄)₂P₂O₇.

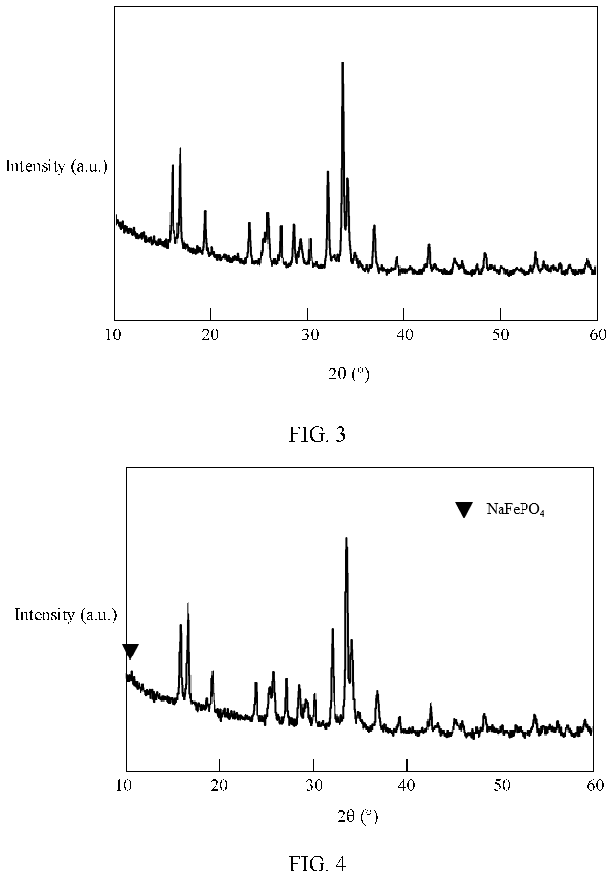

Carbon content of the prepared product was measured to be 1.9 wt%. Fe/P and Mn/P molar ratios of the prepared product obtained through the ICP test were 0.743 and 0.007 respectively. It can be learned from an SEM characterization result shown in FIG. 2 that, morphology is secondary spherical particles formed by agglomeration of primary particles, with secondary particle sizes ranging from 1 µm to 10 µm. As shown in FIG. 3, it can be learned from an XRD measurement that essentially no impurity phase was detectable in the product.

### Example 2:

### Preparation of a polyanion-based sodium-ion battery positive electrode material S2:

Sodium carbonate, ammonium dihydrogen phosphate, ferric oxide, manganese dioxide, and glucose were respectively used as a sodium source, a phosphorus source, an iron source, a transition metal source, and a carbon source; a molar ratio of sodium, iron, manganese, and phosphorus elements in the raw materials was controlled at 4:1.996:1:4; and a molar ratio of the carbon source (calculated based on a carbon element) to a total amount of the iron and manganese elements was controlled at 0.5:1;
the raw materials were charged into a sand mill and ball-milled at a rotation speed of 2000 r/min for 6 h, with solid content of 50 wt% during ball milling;
a mixture was prepared into dry precursor powder by spray drying at 250°C; and
the precursor powder was placed in a box furnace and calcined at 550°C for 12 h under an N₂ atmosphere, followed by natural cooling, to obtain a product including Na₄Fe_{1.996}Mn(PO₄)₂P₂O₇ and a carbon coating layer on a surface of Na₄Fe_{1.996}Mn(PO₄)₂P₂O₇.

Carbon content of the prepared product was measured to be 2.1 wt%. An ICP test was performed, and Fe/P and Mn/P molar ratios of the prepared product were 0.497 and 0.252 respectively. As shown in FIG. 4, it can be learned from an XRD measurement that the product includes a small amount of an NaFePO₄ impurity phase, and content obtained through analysis and calculation was 5%.

### Example 3:

### Preparation of a polyanion-based sodium-ion battery positive electrode material S3:

Sodium carbonate, ammonium dihydrogen phosphate, ferric oxide, manganese dioxide, and glucose were respectively used as a sodium source, a phosphorus source, an iron source, a transition metal source, and a carbon source; a molar ratio of sodium, iron, manganese, and phosphorus elements in the raw materials was controlled at 4:1.97:1:4; and a molar ratio of the carbon source (calculated based on a carbon element) to a total amount of the iron and manganese elements was controlled at 0.5:1;
the raw materials were charged into a sand mill and ball-milled at a rotation speed of 2000 r/min for 6 h, with solid content of 50 wt% during ball milling;
a mixture was prepared into dry precursor powder by spray drying at 250°C; and
the precursor powder was placed in a box furnace and calcined at 550°C for 12 h under an N₂ atmosphere, followed by natural cooling, to obtain a product including Na₄Fe_{1.97}Mn(PO₄)₂P₂O₇ and a carbon coating layer on a surface of Na₄Fe_{1.97}Mn(PO₄)₂P₂O₇.

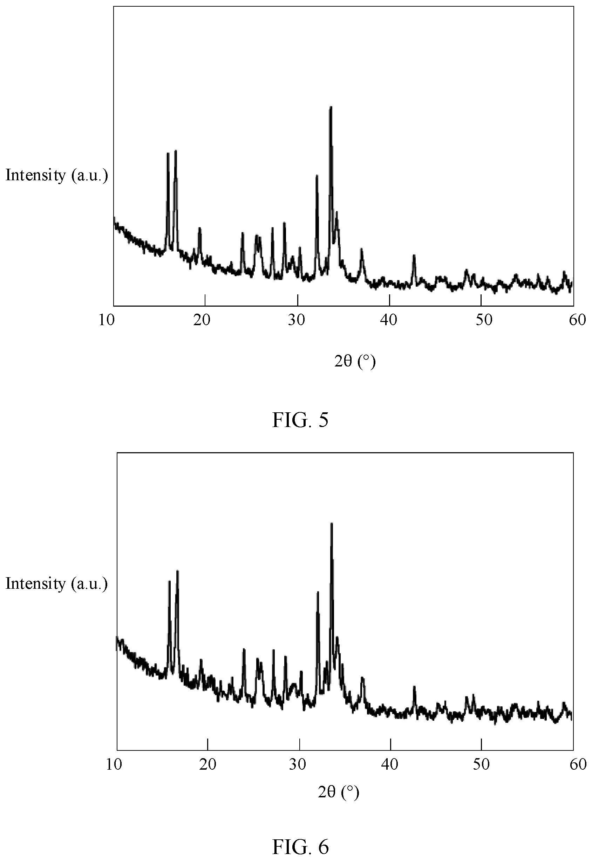

Carbon content of the prepared product was measured to be 1.8 wt%. An ICP test was performed, and Fe/P and Mn/P molar ratios of the prepared product obtained through the ICP test were 0.491 and 0.252 respectively. As shown in FIG. 5, it can be learned from an XRD measurement that essentially no impurity phase was detectable in the product.

### Example 4:

### Preparation of a polyanion-based sodium-ion battery positive electrode material S4:

Sodium carbonate, ammonium dihydrogen phosphate, ferric oxide, manganese dioxide, cobalt oxide, and glucose were respectively used as a sodium source, a phosphorus source, an iron source, a manganese source, a cobalt source, and a carbon source; a molar ratio of sodium, iron, manganese, cobalt, and phosphorus elements in the raw materials was controlled at 4:1.48:0.75:0.75:4; and a molar ratio of the carbon source (calculated based on a carbon element) to a total amount of the iron, manganese, and cobalt elements was controlled at 0.6:1;
the raw materials were charged into a sand mill and ball-milled at a rotation speed of 2000 r/min for 5 h, with solid content of 50 wt% during ball milling;
a mixture was prepared into dry precursor powder by spray drying at 250°C; and
the precursor powder was placed in a box furnace and calcined at 550°C for 12 h under an N₂ atmosphere, followed by natural cooling, to obtain a product including Na₄Fe_{1.48}Mn_{0.75}Co_{0.75}(PO₄)₂P₂O₇ and a carbon coating layer on a surface of Na₄Fe_{1.48}Mn_{0.75}Co_{0.75}(PO₄)₂P₂O₇.

Carbon content of the prepared product was measured to be 2.2 wt%. Fe/P, Mn/P, and Co/P molar ratios of the prepared product obtained through an ICP test were 0.369, 0.182, and 0.189 respectively. As shown in FIG. 6, it can be learned from an XRD measurement that essentially no impurity phase was detectable in the product.

### Example 5:

### Preparation of a polyanion-based sodium-ion battery positive electrode material S5:

Sodium carbonate, ammonium dihydrogen phosphate, ferric oxide, titanium dioxide, and glucose were respectively used as a sodium source, a phosphorus source, an iron source, a titanium source, and a carbon source; a molar ratio of sodium, iron, titanium, and phosphorus elements in the raw materials was controlled at 4:2.97:0.02:4; and a molar ratio of the carbon source (calculated based on a carbon element) to a total amount of the iron and titanium elements was controlled at 0.5:1;
the raw materials were charged into a sand mill and ball-milled at a rotation speed of 2000 r/min for 6 h, with solid content of 50 wt% during ball milling;
a mixture was prepared into dry precursor powder by spray drying at 250°C; and
the precursor powder was placed in a box furnace and calcined at 550°C for 12 h under an N₂ atmosphere, followed by natural cooling, to obtain a product including Na₄Fe_{2.97}Ti_{0.02}(PO₄)₂P₂O₇ and a carbon coating layer on a surface of Na₄Fe_{2.97}Ti_{0.02}(PO₄)₂P₂O₇.

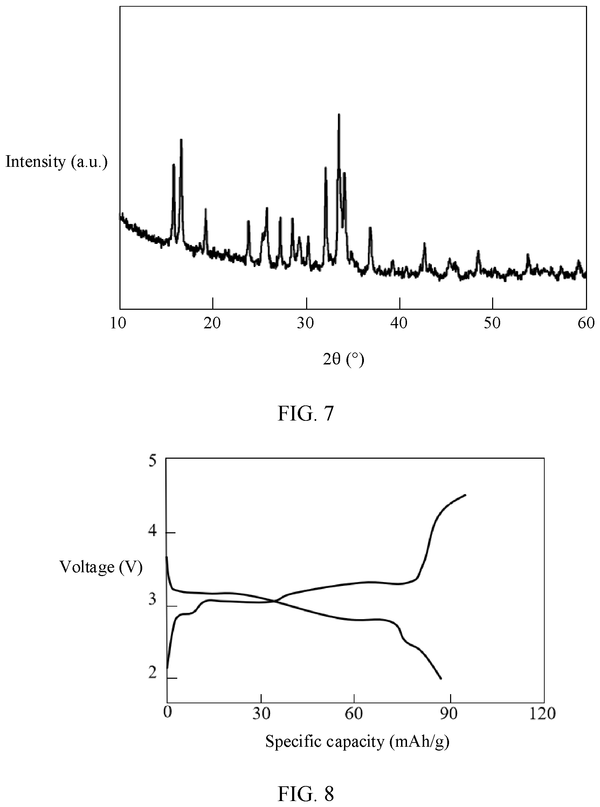

Carbon content of the prepared product was measured to be 1.9 wt%. Fe/P and Ti/P molar ratios of the prepared product obtained through an ICP test were 0.740 and 0.007 respectively. As shown in FIG. 7, it can be learned from an XRD measurement that essentially no impurity phase was detectable in the product.

### Comparative Example 2:

### Preparation of a polyanion-based sodium-ion battery positive electrode material D2:

The method in Comparative Example 1 was performed, except that a molar ratio of sodium, iron, and phosphorus elements in raw materials was 4:2.7:4.

### Comparative Example 3:

### Preparation of a polyanion-based sodium-ion battery positive electrode material D3:

The method in Comparative Example 1 was performed, except that a molar ratio of sodium, iron, and phosphorus elements in raw materials was 4:2.9:4.

### Comparative Example 4:

### Preparation of a polyanion-based sodium-ion battery positive electrode material D4:

The method in Example 1 was performed, except that a molar ratio of sodium, iron, manganese, and phosphorus elements in raw materials was 4:1.6:1:4.

### Comparative Example 5:

### Preparation of a polyanion-based sodium-ion battery positive electrode material D5:

The method in Example 1 was performed, except that the molar ratio of sodium, iron, manganese, and phosphorus elements in raw materials was 4:1.24:1.75:4.

### Test Example 1:

The positive electrode materials of the foregoing embodiments and comparative examples were separately made into positive electrode sheets and then assembled into button cells for a charge-discharge performance test.

### A test process is as follows:

A to-be-tested sample, acetylene black, and PVDF binder were uniformly mixed and coated onto aluminum foil, followed by vacuum drying at 80°C, to obtain an electrode sheet. Based on a total weight of the to-be-tested sample, the acetylene black, and the PVDF binder, an amount of the to-be-tested sample was 80 wt%, an amount of the acetylene black was 10 wt%, and an amount of the PVDF binder was 10 wt%.

A button cell was assembled using the obtained electrode sheet, metallic sodium, and a 0.8 M NaPF₆/EC-DMC electrolyte to test a charge-discharge characteristic. A charge-discharge current was 0.1C, where 1C=129 mA/g.

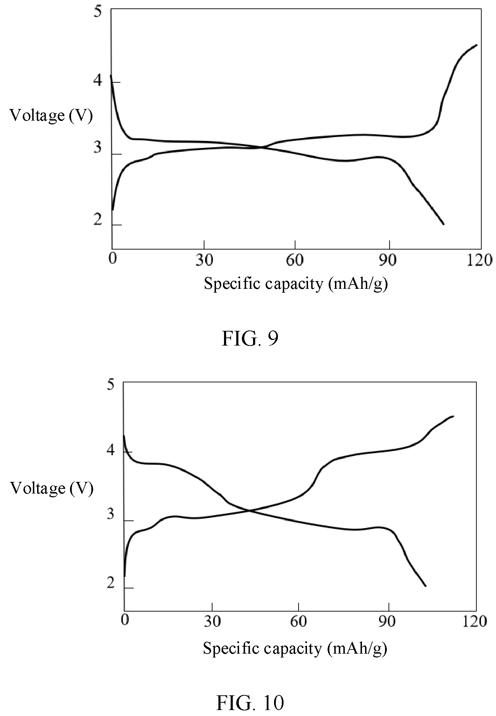

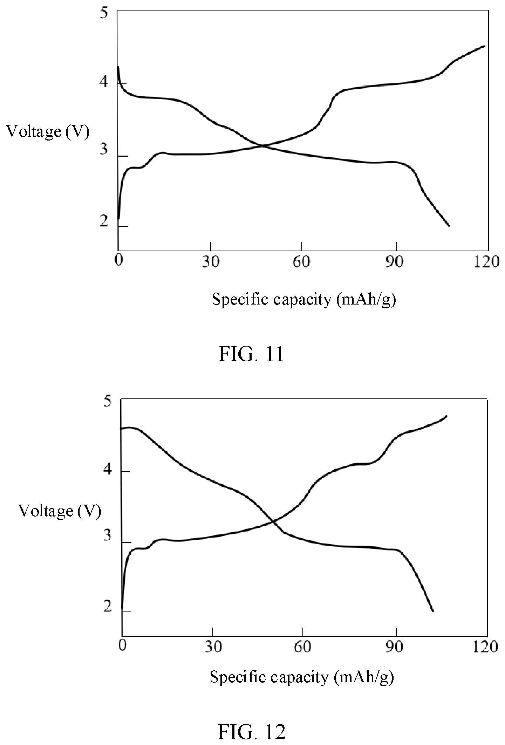

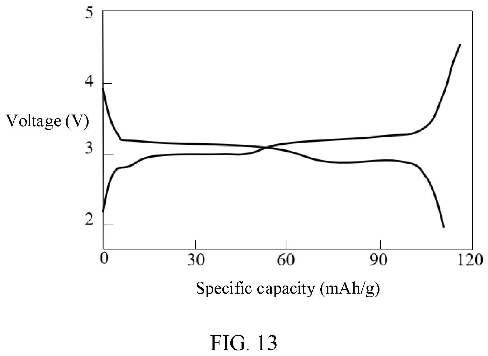

Charge-discharge curves of Comparative Example 1 and Examples 1 to 5 are shown in FIG. 8 to FIG. 13 respectively. Discharge specific capacities and average discharge voltages of Comparative Examples 1 to 5 and Examples 1 to 5 are shown in Table 1.

**Table 1**

| Number | Specific capacity (mAh/g) | Average voltage (V) | 100-week capacity retention |
|---|---|---|---|
| Comparative Example 1 | 88 | 3.03 | 99.0% |
| Example 1 | 108 | 3.13 | 99.8% |
| Example 2 | 101 | 3.24 | 94.3% |
| Example 3 | 107 | 3.25 | 96.5% |
| Example 4 | 98 | 3.53 | 97.3% |
| Example 5 | 110 | 3.14 | 99.5% |
| Comparative Example 2 | 61 | 2.87 | 92.1% |
| Comparative Example 3 | 72 | 2.91 | 95.2% |
| Comparative Example 4 | 54 | 3.04 | 73.4% |
| Comparative Example 5 | 102 | 3.35 | 82.7% |

It can be learned from FIG. 8 to FIG. 13 and Table 1 that, button cells prepared using positive electrode materials prepared in Examples 1 to 5 have higher discharge specific capacities, average discharge voltages, and capacity retention, while button cells prepared using positive electrode materials prepared in Comparative Examples have significantly lower discharge specific capacities, average discharge voltages, and capacity retention than those in Examples.

The foregoing describes preferred implementations of this application in detail. However, this application is not limited thereto. Within the scope of the technical concept of this application, a plurality of simple variations may be made to the technical solution of this application, including combining the technical features in any other appropriate manner. These simple variations and combinations should also be considered as disclosed in this application and fall within the scope of protection of this application.

"One embodiment", "an embodiment", or "one or more embodiments" in this specification means that particular features, structures, or characteristics described with reference to the embodiment are included in at least one embodiment of this application. In addition, it should be noted that, the phrase example "in one embodiment" herein does not necessarily all mean a same embodiment. A lot of specific details are given in this specification. However, it can be understood that embodiments of this application may be practiced without these specific details. In some instances, well-known methods, structures, and techniques are not described in detail so as not to obscure an understanding of this specification.

In the claims, any reference sign placed between parentheses shall not be construed as limitation on the claims. The word "including" does not exclude presence of components or steps not enumerated in the claims. The word "a" or "one" preceding an element does not exclude presence of a plurality of such components. This application may be implemented by using hardware including several different components or by using a suitably programmed computer.

In a unit claim enumerating several apparatuses, several of these apparatuses may be specifically embodied by a same hardware component. The words first, second, third, and the like used are not intended to indicate any order, and may be interpreted as names.

It should be finally noted that, the foregoing embodiments are merely used to describe the technical solutions of this application, but not to limit the technical solutions. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the spirit and scope of the technical solutions of embodiments of this application.

## Claims

1. A polyanion-based sodium-ion battery positive electrode material, wherein the polyanion-based sodium-ion battery positive electrode material comprises a polyanionic compound and a carbon coating layer located on a surface of the polyanionic compound; and a chemical formula of the polyanionic compound is Na₄FeₐM_{b}(PO₄)₂P₂O₇, wherein 1.4≤a<3, 0.005<b≤1.7, and 2.7<a+b<3, and M is a transition metal.

2. The polyanion-based sodium-ion battery positive electrode material according to claim 1, wherein carbon content is 1 wt% to 5 wt% based on a total weight of the polyanion-based sodium-ion battery positive electrode material.

3. The polyanion-based sodium-ion battery positive electrode material according to claim 2, wherein the carbon content is 1 wt% to 3 wt% based on the total weight of the polyanion-based sodium-ion battery positive electrode material.

4. The polyanion-based sodium-ion battery positive electrode material according to claim 1 or 2, wherein M is selected from one or more of the following: Mn, Co, Ni, Cr, Ti, and V.

5. The polyanion-based sodium-ion battery positive electrode material according to claim 1, wherein 1.5≤a<2.99, and 0.01≤b<1.

6. A preparation method for the polyanion-based sodium-ion battery positive electrode material according to any one of claims 1 to 5, wherein the method comprises the following steps:
(1) ball milling a sodium source, a phosphorus source, a carbon source, an iron source, and a transition metal source to obtain a mixture;
(2) spray drying the mixture to obtain precursor powder; and
(3) calcining the precursor powder at 450°C to 650°C under protective gas.

7. The method according to claim 6, wherein a ball milling condition in step (1) comprises: a rotation speed of 1000 r/min to 3000 r/min and time of 2 h to 10 h.

8. The method according to claim 6, wherein a spray drying condition in step (2) comprises a temperature of 150°C to 300°C.

9. The method according to claim 6 or 7, wherein the sodium source is selected from one or more of the following: sodium acetate, sodium oxalate, sodium citrate, trisodium phosphate, sodium dihydrogen phosphate, disodium hydrogen phosphate, sodium pyrophosphate, sodium carbonate, and sodium bicarbonate.

10. The method according to claim 9, wherein the iron source is selected from one or more of the following: iron phosphate, iron nitrate, iron oxide, triiron tetraoxide, ferric sulfate, and ferrous sulfate.

11. The method according to claim 9, wherein the transition metal source is selected from phosphate or oxide of a transition metal.

12. The method according to claim 9, wherein the phosphorus source is selected from one or more of the following: phosphoric acid, ammonium dihydrogen phosphate, diammonium hydrogen phosphate, sodium dihydrogen phosphate, disodium hydrogen phosphate, sodium phosphate, sodium pyrophosphate, trisodium monohydrogen pyrophosphate, disodium dihydrogen pyrophosphate, and monosodium trihydrogen pyrophosphate.

13. The method according to claim 9, wherein the carbon source is selected from one or more of the following: graphene, carbon black, carbon nanotube, Super P, carbon fiber, ascorbic acid, citric acid, glucose, polyethylene glycol, formaldehyde, acetaldehyde, citric acid, malic acid, oxalic acid, adipic acid, starch, and sucrose.

14. Use of the polyanion-based sodium-ion battery positive electrode material according to any one of claims 1 to 5 in a sodium-ion battery.

15. A positive electrode sheet, wherein the positive electrode sheet comprises the polyanion-based sodium-ion battery positive electrode material according to any one of claims 1 to 5.

16. A sodium-ion battery, wherein the sodium-ion battery comprises the positive electrode sheet according to claim 15.
